# EUROPÄISCHE PATENTSCHRIFT

(11) **EP 0 520 159 B1**
(45) Veröffentlichungstag und Bekanntmachung des Hinweises auf die Patenterteilung: **20.12.1995**
(21) Anmeldenummer: 92107448.0
(22) Anmeldetag: 30.04.1992
(51) Int. Cl.: H01H 13/70, H01H 13/02

(54) **Menütasten mit druckempfindlichen Teilflächen für ein an einer Auswuchtmaschine angeordnetes Bildschirmgerät**
Menu-key with pressure sensitive reference areas for a visual display unit arranged on a balancing machine
Touches de menu avec surface primitive de référence sensible à la pression pour un terminal avec écran cathodique placé à une machine à équilibrage

(30) Priorität: 05.06.1991 DE 9106896 U
(43) Veröffentlichungstag der Anmeldung: 30.12.1992
(73) Patentinhaber: HOFMANN WERKSTATT-TECHNIK GMBH, D-64319 Pfungstadt (DE)
(72) Erfinder: Kühn, Gottfried, W-6108 Weiterstadt (DE)
(74) Vertreter: Nöth, Heinz, Dipl.-Phys.

(56) Entgegenhaltungen:
- EP-A- 0 315 910
- AT-B- 374 961
- DE-A- 2 924 993
- DE-A- 2 929 574
- GB-A- 1 537 872

## Beschreibung

Die Erfindung betrifft eine Auswuchtmaschine nach dem Oberbegriff des Patentanspruches 1.

Es ist bekannt, Radauswuchtmaschinen, insbesondere für Kraftfahrzeugräder, mit einem Bildschirm auszustatten und über Pictogramme und mit dem Bildschirm zugeordneten mehreren in einer Menueleiste angeordneten Menuetasten die Bedienung der Auswuchtmaschine zu steuern. Die Menuetasten haben dabei jeweils nur die Funktion, das entsprechende Menue aufzurufen und wieder auszuschalten, d.h. eine EIN-AUS-Funktion.

Aufgabe der Erfindung ist es, eine Auswuchtmaschine der eingangs genannten Art zu schaffen, bei der ohne zusätzlichen Bedarf an Tasten eine Erleichterung der bildschirmgestützten Bedienung erzielt wird.

Diese Aufgabe wird erfindungsgemäß durch die Merkmale des Patentanspruches 1 gelöst.

Aus der AT-B-374 961 ist ein elektrisches Schalt- und Formplattenelement in Form eines Folien- bzw. Membranschalters bekannt, dessen Tastfläche mit mehreren druckempfindlichen Teilflächen ausgestattet ist, wobei den Teilflächen jeweils ein Kontaktgeber zugeordnet ist und jede druckempfindliche Teilfläche gegenüber den restlichen Tastflächen der Menuetaste und den anderen druckempfindlichen Teilflächen separat druckempfindlich ist.

Aus der EP-A-0 315 910 ist eine Achtdirektionstaste für ein Computerterminal bekannt. Demgengenüber ist die spezielle Ausgestaltung der Tastflächen zur Erleichterung der Bedienung der Radauswuchtmaschine dergestalt, daß mit dem jeweils am Bildschirm dargestellten Picotgramm eine bestimmte Maschinenfunktion gesteuert eingestellt werden kann. Dies läßt sich aus den Veröffentlichungen nicht ableiten.

Eine separate Druckempfindlichkeit der einzelnen Teilflächen kann dadurch erreicht werden, daß jede druckempfindliche Teilfläche gegenüber der restlichen Teilfläche der Menuetaste und den anderen druckempfindlichen Teilflächen separat beweglich an der Menuetaste angeordnet ist.

Hierzu können die druckempfindlichen Teilflächen als Tastkontakte ausgebildet sein. Diese Tastkontakte können in Form von Tastfolien oder als Gummitasten ausgelegt werden.

Es ist jedoch auch möglich, die separate Druckempfindlichkeit der einzelnen Teilflächen der Tastfläche dadurch zu erreichen, daß die Tastfläche der Menuetaste kippbar an einer Unterlage angeordnet ist und daß verschiedenen Kippstellungen der Tastfläche die Tastkontakte zugeordnet sind. Hierzu kann die Tastfläche als Drucktaste ausgebildet sein, die an ihrer Unterseite die Tastkontakte aufweist, wobei zur Bildung der Kontaktgeber an einer Leiterplatte den Tastkontakten feststehende Kontakte gegenüberliegen. Die Leiterplatte kann dabei die Unterlage bilden, an der die Menuetaste kippbar angeordnet ist. In bevorzugter Weise ist die Menuetaste elastisch kippbar, beispielsweise mit Hilfe eines Gummidoms, gelagert.

Durch die Erfindung wird eine höhere Funktionalität im Bereich der jeweiligen Tastflächen der bevorzugt in einer Menueleiste angeordneten Menuetasten erreicht, ohne daß dabei ein zusätzlicher Bedarf an Tastfläche vorliegt.

Die Erfindung kommt bei an Auswuchtmaschinen angeordneten Bildschirmgeräten zur Anwendung. Man gewinnt auf diese Weise eine vielseitige Steuerung über Pictogramme, die auf dem Bildschirm dargestellt werden, für die Bedienung der Radauswuchtmaschine. Durch entsprechende Anordnung der druckempfindlichen Teilflächen, welche mit den Kontaktgebern gekoppelt sind, lassen sich durch Druck rechts oder links einer vertikalen Mittellinie der Tastfläche ferner bezüglich einer horizontalen Mittellinie durch Druck oben oder unten auf der Tastfläche der Menuetaste vier voneinander unabhängige Steuersignale für die Maschinenbedienung erreichen. Hierbei kann beispielsweise der linke und rechte Tastenkontaktdruck ausgewertet werden, um eine Umschaltung vorzunehmen oder um einen Cursor (Textzeiger) nach links oder rechts zu bewegen. Durch den oberen und unteren Tastenkontaktdruck kann beispielsweise der Cursor (Textzeiger) nach oben oder unten verschoben werden. Es ist auch möglich, hierdurch einen Zahlenwert zu inkrementieren oder dekrementieren. Ohne großen Aufwand gewinnt man damit eine höhere Funktionalität für die Bedienungssteuerung.

Anhand der Figuren wird an einem Ausführungsbeispiel die Erfindung noch näher erläutert. Es zeigt:
- Fig. 1: eine Gesamtansicht eines Ausführungsbeispiels, welches ein an einer Auswuchtmaschine angeordnetes Bildschirmgerät darstellt;
- Fig. 2: die Draufsicht auf eine Menuetaste mit zusätzlichen Funktionstasten, welche beim Ausführungsbeispiel der Erfindung zur Anwendung kommt;
- Fig. 3: eine Seitenansicht von der längeren Seite der in Fig. 2 dargestellten Menuetaste in teilweise gebrochener Darstellung;
- Fig. 4: eine Seitenansicht von der kürzeren Seite der in Fig. 2 dargestellten Menuetaste;
- Fig. 5: ein weiteres Ausführungsbeispiel das nicht unter den Schutzbereich des Anspruchs 1 füllt einer Menuetaste in Draufsicht;
- Fig. 6: eine Seitenansicht eines Ausführungsbeispiels das nicht unter den Schutzbereich des Anspruchs 1 füllt; und
- Fig. 7: die Ausbildung feststehender Kontakte, welche zusammen mit den Tastkontakten der beiden Ausführungsbeispiele Kontaktgeber bilden.

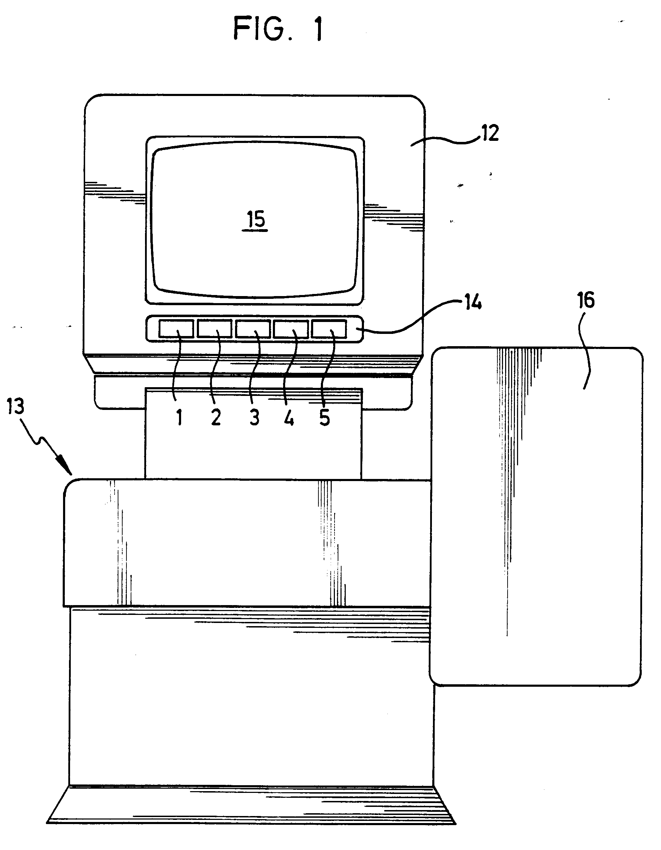

Das in der Figur 1 dargestellte, an einer Auswuchtmaschine 13 angeordnete Bildschirmgerät 12 besitzt an seiner Vorderseite einen Bildschirm 15 und in einer darunter angeordneten horizontalen Menueleiste 14 fünf in Reihe angeordnete Menuetasten 1, 2, 3, 4 und 5.

Die Auswuchtmaschine kann einen herkömmlichen Aufbau besitzen. Hierzu ist im Bereich des aufzuspannenden und auszuwuchtenden Kraftfahrzeugrades eine Schutzhaube 16 vorgesehen.

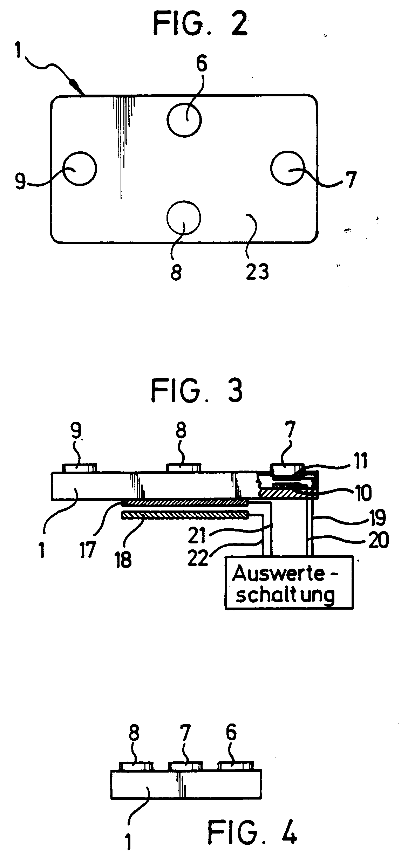

Die Menuetasten 1 bis 5 dienen zur Bedienungssteuerung der Radauswuchtmaschine 13. In den Figuren 2 bis 4 ist die Ausbildung einer Menuetaste 1 im einzelnen dargestellt. Diese Menuetaste 1 besitzt einen rechteckigen Querschnitt, wie aus Fig. 2 zu ersehen ist. Auf dieser Menuetaste sind vier als Tastkontakte ausgebildete druckempfindliche Teilflächen 6, 7, 8, 9 vorgesehen, welche einen vergleichsweise geringen Teil der Gesamttastfläche 23 der Menuetaste 1 einnehmen. Wie aus Fig. 3 zu ersehen ist, ist mit jedem Tastkontakt 6, 7, 8, 9 ein elektrischer Kontakt 11 verbunden. Dem elektrischen Kontakt 11 liegt ein an der Menuetaste 1 angeordneter elektrischer Kontakt 10 als Gegenkontakt gegenüber Die beiden den jeweiligen druckempfindlichen Teilflächen bzw. Tastkontakten 6, 7, 8, 9 zugeordneten Kontakte 10 und 11 bilden einen Kontaktgeber. Jeder der beiden Kontakte 10 und 11 besitzt eine Ausgangsleitung 19 und 20, welche mit einer Auswerteschaltung der Auswuchtmaschine 13 verbunden sind. Die beiden Ausgangsleitungen 19 und 20 bilden Signalleitungen, welche bei Betätigung bzw. beim Drücken der jeweiligen Tastenkontakte 6, 7, 8, 9 ein entsprechendes Steuersignal an die Auswerteschaltung liefern. Wie insbesondere aus der Fig. 3 zu ersehen ist, kann jeder Tastenkontakt 6, 7, 8, 9 separat von der Menuetaste 1 sowie separat von den übrigen Tastenkontakten betätigt werden, so daß ein dem jeweiligen Tastenkontakt zugeordnetes Steuersignal der Auswerteschaltung zugeleitet wird. Beim dargestellten Ausführungsbeispiel ist der Kontakt 10 am Material der Menuetaste 1 abgestützt. Der Kontakt 11 ist mit dem beweglichen Teil der druckempfindlichen Teilfläche 7 bzw. dem Tastkontakt verbunden. Der Kontakt 11 bildet somit den beweglichen Kontakt, und der Kontakt 10 bildet einen feststehenden Kontakt des dem jeweiligen Tastkontakt 6, 7, 8, 9 zugeordneten Kontaktgebers.

Wie ferner aus der Fig. 3 zu ersehen ist, besitzt jede Menuetaste 1 ebenfalls einen zugeordneten Kontaktgeber, bestehend aus den Kontakten 17 und 18. Beim Betätigen der jeweiligen Menuetaste 1 bis 5 werden die beiden Kontakte 17 und 18 in Berührung gebracht, wodurch über mit den Kontakten 17 und 18 verbundene Ausgangsleitungen 21, 22 in der Auswerteschaltung ein entsprechendes Steuersignal für den Aufruf und die Darstellung des entsprechenden Menues auf dem Bildschirm 15 erzeugt wird.

Beim Betätigen der Menuetaste werden die druckempfindlichen Teilflächen bzw. Tastkontakte 6, 7, 8, 9 und die zugeordneten Kontaktgeber in Form der beiden Kontakte 10 und 11 jeweils unverändert mitbewegt, so daß nur durch die Kontaktgabe der beiden Kontakte 17 und 18 ein entsprechendes Menuesignal in der Auswerteschaltung erzeugt wird.

Anstelle des in der Fig. 3 dargestellten Ausführungsbeispiels für einen Tastkontakt 7, der stellvertretend für die anderen Tastkontakte mit zugeordnetem Kontaktgeber (Kontakte 10 und 11) dargestellt ist, kann der Tastkontakt mit zugeordnetem Kontaktgeber auch so ausgestaltet sein, daß er durch eine Bohrung im Material der Menuetaste hindurchragt und der bewegliche Kontakt 11 am Tastkontakt und der ortsfeste Kontakt 10 an einer unterhalb der Menuetaste 1 liegenden Unterlage ortsfest angeordnet sind. Auch hierbei ist eine separate Betätigung eines jeweiligen Tastkontaktes möglich.

In den Figuren 2 bis 4 sind an der Menuetaste 1 vier druckempfindliche Teilflächen 6, 7, 8, 9 als Tastkontakte vorgesehen. In der Auswerteschaltung kann das von den jeweiligen Kontaktgebern (Kontakte 10, 11) der Tastkontakte 6 bis 9 abgegebene Signal bei jeder der Menuetasten 1 bis 5 ausgewertet werden, so daß für nur eine Menuetaste die druckempfindlichen Teilflächen 6 bis 9 bzw. Tastkontakte vorgesehen sind. Es ist jedoch auch möglich, daß für alle Menuetasten 1 bis 5 die in den Figuren 2 bis 4 dargestellte Ausbildung zur Anwendung kommt. Es ist auch möglich, daß nur für einen Teil der fünf Menuetasten 1 bis 5 die in den Figuren 2 bis 4 dargestellte Ausführungsform zur Anwendung kommt.

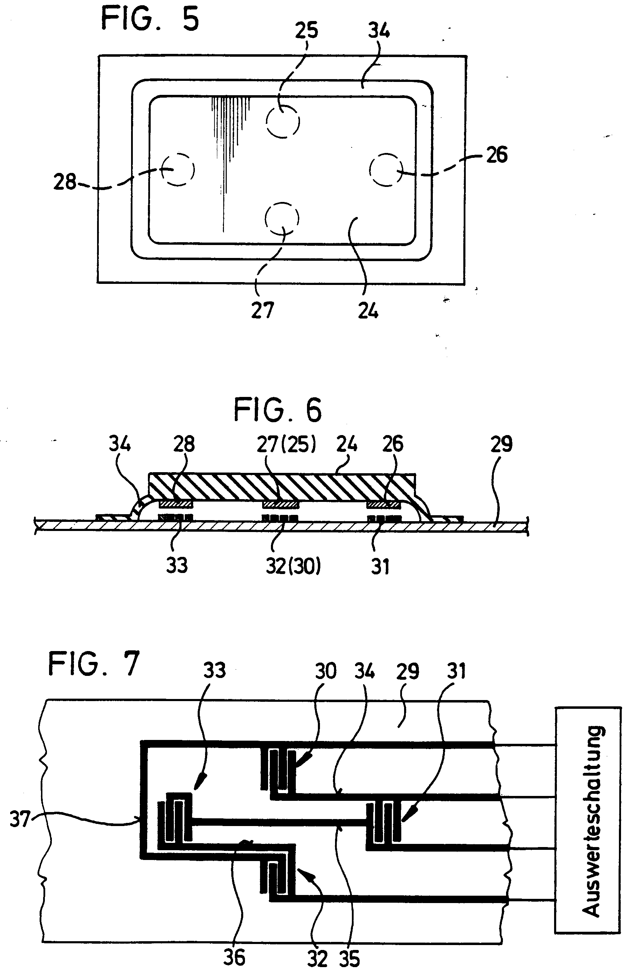

Bei dem in den Figuren 5 und 6 dargestellten Ausführungsbeispiel einer Menuetaste ist eine Tastfläche 24 als Drucktaste, beispielsweise aus Hartgummi, ausgebildet. Diese Tastfläche ist mittels eines elastisch verformbaren, insbesondere gummielastisch ausgebildeten Doms 34 an einer Leiterplatte 29 abgestützt. An der Unterseite der Tastfläche 24 sind Tastkontakte 25, 26, 27 und 28 vorgesehen, welche beispielsweise aus elektrisch leitendem Silikonkautschuk bestehen. Auf der Leiterplatte 29 befinden sich den Tastkontakten 25, 26, 27 und 28 gegenüberliegend feststehende Kontakte 30, 31, 32, 33, welche über Verbindungsleitungen 34, 35, 36 und 37 nach Art einer Kreuzmatrixschaltung miteinander verschaltet sind. Das Layout der feststehenden Kontakte und deren Verbindung zu einer Kreuzmatrixschaltung ist in der Fig. 7 dargestellt.

Aufgrund der gummielastischen Lagerung durch den Dom 34 läßt sich die Tastfläche 24 gegenüber der als Grundplatte dienenden Leiterplatte 29 kippen, so daß jeweils nur einer der Tastkontakte 25 bis 28 mit dem zugehörigen feststehenden Kontakt 30 bis 33 auf der Leiterplatte 29 in elektrisch leitende Berührung kommt. Dabei werden durch die Fläche des jeweiligen Tastkontaktes die fingerartigen Einzelkontakte der feststehenden Kontakte 30 bis 33 auf der Leiterplatte 29, welche kammartig ineinander greifen, miteinander verbunden. Wie aus der Fig. 7 ferner zu ersehen ist, sind die in Kreuzmatrixschaltung miteinander verbundenen feststehenden Kontakte 30 bis 33 mit einer Auswerteschaltung verbunden. In dieser Auswerteschaltung werden dann die entsprechenden Menuepunkte bzw. Funktionen in Abhängigkeit von dem jeweils betätigten Kontaktgeber veranlaßt und auf dem Bildschirm 15 kenntlich gemacht. Es ist natürlich auch möglich, durch Drücken der als Drucktaste ausgebildeten Tastfläche 24 alle vier Tastkontakte 25 bis 28 mit den feststehenden Kontakten 30 bis 33 in Berührung zu bringen und dabei z. B. ein bestimmtes Menue aufzurufen, das am Bildschirm 15 sichtbar gemacht wird.

## Patentansprüche

1. Radauswuchtmaschine für Kraftfahrzeugräder mit einem Bildschirmgerät (12), das an seiner Gerätevorderseite einen Bildschirm (15) und mehrere Menuetasten (1 - 5) zum Aufrufen bestimmter, am Bildschirm (15) für die Bedienung der Maschine anzeigbarer Pictogramme aufweist,
dadurch **gekennzeichnet**,
daß druckempfindliche Teilflächen (6, 7, 8, 9) an der Menuetaste (1 - 5) angeordnet sind, wobei jede druckempfindliche Teilfläche (6, 7, 8, 9) gegenüber der restlichen Tastfläche der Menuetaste und den anderen druckempfindlichen Teilflächen separat druckempfindlich ist und jeder Teilfläche (6, 7, 8, 9) ein Kontaktgeber (10, 11) sowie außerdem der Menuetaste als ganzes ein weiterer Kontaktgeber (17, 18) zugeordnet ist, mit denen über das jeweilige, am Bildschirm (15) dargestellte Pictogramm eine bestimmte Maschinenfunktion gesteuert eingestellt wird.

2. Radauswuchtmaschine nach Anspruch 1, dadurch gekennzeichnet, daß die druckempfindlichen Teilflächen (6, 7, 8, 9) als Tastkontakte ausgebildet sind.

3. Radauswuchtmaschine nach Anspruch 1 oder 2, dadurch gekennzeichnet, daß vier druckempfindliche Teilflächen (6, 7, 8, 9) an der Menuetaste (1 - 5) angeordnet sind.

4. Radauswuchtmaschine nach Anspruch 3, dadurch gekennzeichnet, daß bezüglich einer vertikalen Mittellinie (VM) einer rechteckigen Tastfläche der Menuetaste eine druckempfindliche Teilfläche links und eine druckempfindliche Teilfläche rechts angeordnet sind, und daß bezüglich einer horizontalen Mittellinie (HM) der rechteckigen Tastfläche der Menuetaste eine druckempfindliche Teilfläche oben und eine druckempfindliche Teilfläche unten angeordnet sind.

5. Radauswuchtmaschine nach einem der Ansprüche 1 bis 4, dadurch gekennzeichnet, daß nur eine der mehreren Menuetasten (1 - 5) die druckempfindlichen Teilflächen (6, 7, 8, 9) aufweist.

6. Radauswuchtmaschine nach einem der Ansprüche 1 bis 4, dadurch gekennzeichnet, daß alle Menuetasten (1 - 5) die druckempfindlichen Teilflächen (6, 7, 8, 9) aufweisen.

7. Radauswuchtmaschine nach einem der Ansprüche 1 bis 6, dadurch gekennzeichnet, daß die mehreren Menuetasten in einer horizontalen Reihe (14) unter dem Bildschirm (15) angeordnet sind.

8. Radauswuchtmaschine nach einem der Ansprüche 1 bis 7, dadurch gekennzeichnet, daß die druckempfindlichen Teilflächen (6, 7, 8, 9) mit der jeweiligen Menuetaste (1 - 5), an der sie angeordnet sind, beim Betätigen der Menuetaste mitbewegbar sind und die den druckempfindlichen Teilflächen (6, 7, 8, 9) zugeordneten Kontaktgeber (10, 11) an der Menuetaste vorgesehen sind.

9. Radauswuchtmaschine nach Anspruch 2, dadurch gekennzeichnet, daß die als Tastkontakte ausgebildeten druckempfindlichen Teilflächen (6, 7, 8, 9) als Tastfolien ausgebildet sind.

10. Radauswuchtmaschine nach Anspruch 2, dadurch gekennzeichnet, daß die als Tastkontakte ausgebildeten druckempfindlichen Teilflächen (6, 7, 8, 9) als Gummitasten ausgebildet sind.

## Claims

1. A wheel balancing machine for motor vehicle wheels comprising a visual display unit (12) which at its front side has a display screen (15) and a plurality of menu keys (1-5) for calling up specific icons which can be displayed on the picture screen (15) for operation of the machine, characterised in that pressure-sensitive surface portions (6, 7, 8, 9) are arranged at the menu key (1-5), wherein each pressure-sensitive surface portion (6, 7, 8, 9) is separately pressure-sensitive relative to the rest of the keying surface of the menu key and the other pressure-sensitive surface portions and a contact maker (10, 11) is associated with each surface portion (6, 7, 8, 9) and in addition a further contact maker (17, 18) is associated with the menu key as a whole, with which contact makers a specific machine function is controlledly set by way of the respective icon which is represented on the picture screen (15).

2. A wheel balancing machine according to claim 1 characterised in that the pressure-sensitive surface portions (6, 7, 8, 9) are in the form of key contacts.

3. A wheel balancing machine according to claim 1 or claim 2 characterised in that four pressure-sensitive surface portions (6, 7, 8, 9) are arranged at the menu key (1-5).

4. A wheel balancing machine according to claim 3 characterised in that a pressure-sensitive surface portion is arranged on the left and a pressure-sensitive surface portion is arranged on the right relative to a vertical centre line (VM) of a rectangular keying surface of the menu key and that a pressure-sensitive surface portion is arranged above and a pressure-sensitive surface portion is arranged below a horizontal centre line (HM) of the rectangular keying surface of the menu key.

5. A wheel balancing machine according to one of claims 1 to 4 characterised in that only one of the plurality of menu keys (1-5) has the pressure-sensitive surface portions (6, 7, 8, 9).

6. A wheel balancing machine according to one of claims 1 to 4 characterised in that all menu keys (1-5) have the pressure-sensitive surface portions (6, 7, 8, 9).

7. A wheel balancing machine according to one of claims 1 to 6 characterised in that the plurality of menu keys are arranged in a horizontal row (14) under the picture screen (15).

8. A wheel balancing machine according to one of claims 1 to 7 characterised in that the pressure-sensitive surface portions (6, 7, 8, 9) are also movable with the respective menu key (1-5) at which they are arranged, upon actuation of the menu key, and the contact makers (10, 11) associated with the pressure-sensitive surface portions (6, 7, 8, 9) are provided on the menu key.

9. A wheel balancing machine according to claim 2 characterised in that the pressure-sensitive surface portions (6, 7, 8, 9) which are in the form of keying contacts are in the form of keying foils.

10. A wheel balancing machine according to claim 2 characterised in that the pressure-sensitive surface portions (6, 7, 8, 9) which are in the form of keying contacts are in the form of rubber keys.

## Revendications

1. Machine d'équilibrage de roue pour des roues de véhicule automobile comportant un terminal à écran de visualisation (12) qui possède, sur sa face avant portant des appareils, un écran (15) et plusieurs touches de menu (1 à 5) pour appeler des pictogrammes déterminés, pouvant être affichés sur l'écran (15) pour la commande de la machine,
caractérisée par le fait
que des surfaces partielles (6,7,8,9) sensibles à une pression sont disposées sur la touche de menu (1 à 5), chaque surface partielle (6,7,8,9) sensible à la pression s'étendant séparément du reste de la surface d'actionnement de la touche de menu et des autres surfaces partielles sensibles à la pression, et un générateur de contact (10,11) étant associé à chaque surface partielle (6,7,8,9) et un autre générateur de contact (17,18) étant en outre associé à la touche de menu dans son ensemble, générateurs de contact à l'aide desquels un fonctionnement déterminé de la machine est réglé d'une manière commandée, par l'intermédiaire du pictogramme respectif représenté sur l'écran (15).

2. Machine d'équilibrage de roue suivant la revendication 1, caractérisée par le fait que les surfaces partielles (6,7,8,9) sensibles à la pression sont agencées sous la forme de contacts d'actionnement.

3. Machine d'équilibrage de roue suivant la revendication 1 ou 2, caractérisée par le fait que quatre surfaces partielles (6,7,8,9) sensibles à la pression sont disposées sur la touche de menu (1 à 5).

4. Machine d'équilibrage de roue selon la revendication 3, caractérisée par le fait qu'une surface partielle sensible à la pression est disposée à gauche et une surface partielle sensible à la pression est disposée à droite d'une ligne médiane verticale (VM) d'une surface rectangulaire d'actionnement de la touche de menu, et qu'une surface partielle sensible à la pression est disposée au-dessus et une surface partielle sensible à la pression est disposée au-dessous d'une ligne médiane horizontale (HM) de la surface d'actionnement rectangulaire de la touche de menu.

5. Machine d'équilibrage de roue suivant l'une des revendications 1 à 4, caractérisée par le fait que seule l'une des touches de menu (1 à 5) possède les surfaces partielles (6,7,8,9) sensibles à la pression.

6. Machine d'équilibrage de roue suivant l'une des revendications 1 à 4, caractérisée par le fait que toutes les touches de menu (1 à 5) possèdent les surfaces partielles (6,7,8,9) sensibles à la pression.

7. Machine d'équilibrage de roue suivant l'une des revendications 1 à 6, caractérisée par le fait que les différentes touches de menu sont disposées suivant une rangée horizontale (14) au-dessous de l'écran (15).

8. Machine d'équilibrage de roue suivant l'une des revendications 1 à 7, caractérisée par le fait que les surfaces partielles (6,7,8,9) sensibles à la pression sont entraînées simultanément par la touche de menu respective (1-5), sur laquelle elles sont disposées, lors de l'actionnement de la touche de menu et les générateurs de contact (10,11), qui sont associés aux surfaces partielles (6,7,8,9) sensibles à la pression, sont prévus sur la touche de menu.

9. Machine d'équilibrage de roue suivant la revendication 2, caractérisée par le fait que les surfaces partielles (6,7,8,9) sensibles à la pression, qui sont réalisées sous la forme de contacts d'actionnement, sont agencées sous la forme de feuilles d'actionnement.

10. Machine d'équilibrage de roue suivant la revendication 2, caractérisée par le fait que les surfaces partielles (6,7,8,9) sensibles à la pression, qui sont agencées sous la forme de contacts d'actionnement, sont réalisées sous la forme de touches en caoutchouc.
